# EUROPEAN PATENT SPECIFICATION

(11) **EP 3 505 479 B1**
(45) Date of publication and mention of the grant of the patent: **28.02.2024**
(21) Application number: 17211070.2
(22) Date of filing: 29.12.2017
(51) Int. Cl.: B66B 5/00, B66B 25/00

(54) **A SAFETY CIRCUIT BOARD FOR A PASSENGER TRANSPORT INSTALLATION**
SICHERHEITSLEITERPLATTE FÜR EINE PERSONENBEFÖRDERUNGSANLAGE
CARTE DE CIRCUIT DE SÉCURITÉ POUR UNE INSTALLATION DE TRANSPORT DE PASSAGERS

(43) Date of publication of application: 03.07.2019
(73) Proprietor: KONE Corporation, 00330 Helsinki (FI)
(72) Inventor: Jussila, Ari, 00330 Helsinki (FI); Hirvonen, Toni, 00330 Helsinki (FI)
(74) Representative: Papula Oy

(56) References cited:
- WO-A1-2016/150469
- US-A1- 2007 007 087

## Description

Safety is an important factor in elevator systems and escalator systems. These systems may comprise a number of safety devices providing signals for a controlling unit, for example, a safety circuit board. The controlling unit then determines whether operation of an elevator or an escalator is possible.

PESSRAL/PESSRAE (Programmable Electronic System in Safety Related Applications for Lifts/Programmable Electronic System in Safety Related Applications for Escalators) standards require that safety output relays are tested at least once a day. This means that an elevator or an escalator has to be stopped in order to perform the relay testing.

In certain locations where there is continuous heavy people traffic, escalator safety regulations may require that escalators run continuously through a service interval that can be several months long. However, in order to test a safety output relay of the escalator, the escalator must be stopped. US 2007/007087 A1 shows a safety circuit board according to the preamble of claim 1.

Thus, it would be beneficial to have a solution that would alleviate at least one of these drawbacks.

### SUMMARY

According to at least some of the aspects, a solution is provided that enables performing safety output relay testing of a safety circuit while a passenger transport installation system is running.

According to a first aspect of the invention, there is provided a safety circuit board for controlling an electromechanical brake and motor of a passenger transport installation. The safety circuit controller comprises at least one processing unit, a main safety output with an associated relay connected to the at least one processing unit and providing a connection to the electromechanical brake and motor, and a secondary safety output with an associated relay connected to the at least one processing unit and providing a connection to the electromechanical brake and motor controller. The main safety output and the secondary safety output are configured in parallel enabling control of the electromechanical brake and motor controller with the at least one processing unit using either of the safety outputs. The at least one processing unit is configured to switch from one of the main safety output and the secondary safety output to the other one of the main safety output and the secondary safety output; disable an immediate new switching between the safety outputs; test the relay associated with the safety output from which the switching process was originated; and allow a subsequent switching after a successful relay test, and disable a subsequent switching when detecting a failure with the relay test.

In an embodiment, the least one processing unit is configured to alternate between the main safety output and the secondary safety output when controlling the electromechanical brake and motor controller.

In an embodiment, the at least one processing unit is configured to switch periodically, for example, every one hour between the main safety output and the secondary safety output when controlling the electromechanical brake and motor controller.

In an embodiment, the at least one processing unit is configured to detect that a switch between the main safety output and the secondary safety output fails, and to limit the maximum usage time of the currently used safety output.

In an embodiment, the at least one processing unit is configured to issue a request to stop the passenger transport installation in response to exceeding the maximum usage time.

In an embodiment, the passenger transport installation comprises an elevator.

In an embodiment, the passenger transport installation comprises an escalator.

According to a second aspect of the invention, there is provided a passenger transport system comprising an electromechanical brake and motor controller of a passenger transport installation, and a safety circuit controller according to the first aspect.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:

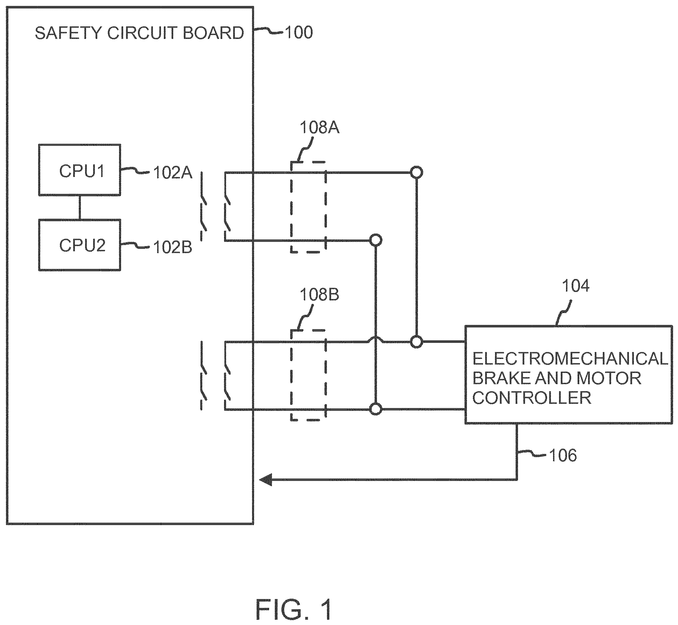

**FIG. 1** illustrates a block diagram of a safety circuit controller for controlling an electromechanical brake and motor controller according to an aspect.

### DETAILED DESCRIPTION

FIG. 1 illustrates a block diagram of a safety circuit board 100 for controlling an electromechanical brake and motor controller 104 of a passenger transport installation via a main safety output 108A and a secondary safety output 108B. The safety circuit board 100 comprises at least one processing unit 102A, 102B for controlling operation of the safety circuit board 100. FIG. 1 illustrates an example in which the safety circuit board 100 comprises two processing units. The processing units 102A, 102B may be used so that the processing unit 102A acts as a primary processing unit and the processing unit 102B acts as a backup processing unit in case of the processing unit 102A fails. The safety circuit board 100 may receive signals, for example, from various safety contacts of a passenger transport system. For example, the safety circuit board 100 may use safety contact and sensor information from an elevator shaft, a machine room and an elevator car and controls main and brake contactors with a safety output.

The main safety output 108A is associated with a relay connected to the at least one processing unit 102A, 102B. The main safety output 108A also provides a connection to the electromechanical brake and motor control 104. Similarly, the secondary safety output 108B is associated with a relay connected to the at least one processing unit 102A, 102B. Also the secondary safety output provides a connection to the electromechanical brake and motor 104. The main safety output 108A and the secondary safety output 108B are configured in parallel enabling control of the electromechanical brake and motor 104 with the at least one processing unit 102A, 102B using either of the safety outputs 108A, 108B. Once the electromechanical brake and motor controller 104 receives a signal from either of the safety outputs 108A, 108B, it may send a start permit signal 106 to the safety circuit board 100.

As the relays will eventually wear out, the disclosed solution increases the expected lifetime of the safety because the usage of the safety output relays may be divided to two separate safety outputs. Further, in one embodiment, the passenger transport installation may be allowed to continue normal operation for a long time (even years) when there has been detected a permanent failure in one of the safety outputs. The call out can be avoided and the safety circuit board can be replaced during a normal maintenance visit.

In an embodiment, the at least one processing unit 102A, 102B is configured to alternate between the main safety output 108A and the secondary safety output 108B when controlling the electromechanical brake and motor controller 104. In a further embodiment, the used safety output used may be changed to the other one after each normal run of the passenger transport installation. In a further embodiment, the secondary safety output 108B may be used as a backup safety output and is taken into use only after a failure in the main safety output 108A has been detected. In a further embodiment a switch between the main safety output 108A and the secondary safety output 108B may be performed periodically, for example, every one hour. When a switching process from one safety output to another safety output has been started, an immediate new switching is disabled. The switching is allowed again after a successful relay test for the other safety output. If the safety circuit board detects a possible failure in a tested safety output, it disables switching to this safety output.

In an embodiment, if a test of the main safety output 108A is successful, the main safety output 108A may be selected as the current safety output. Then, if a periodical test of the main safety output 108A fails but a periodical test of the secondary safety output 108B is successful, the secondary safety output 108B may be selected as current safety output.

In an embodiment, the at least one processing unit 102A, 102B may be configured to detect that a switch between the main safety output 108A and the secondary safety output 108B fails and to limit the maximum usage time of the currently used safety output from the main safety output 108A and the secondary safety output. The at least one processing unit 102A, 102B may also be configured to issue a request to stop the passenger transport installation in response to exceeding the maximum usage time. This provides additional safety as the safety circuit board allows the use of the passenger transport installation only for a specified time in a situation in which only one safety input is functional.

In an embodiment the at least one processing unit 102A, 102B is configured to, while controlling the electromechanical brake and motor controller 104 with the main safety output 108A or the secondary safety output 108B, test the other one of the safety outputs. This allows performing relay testing for one safety output at a time.

In an embodiment, the at least one processing unit 102A, 102B is configured to issue an alert when determining a failure with one of the main safety output 108A or the secondary safety output 108B. An immediate maintenance call can be avoided and safety circuit board may be replaced later during a normal maintenance visit.

The passenger transport installation may be, for example, an elevator or an escalator. Thus, an elevator system or an escalator system may comprise the above discussed safety circuit board.

Example embodiments may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

All or a portion of the example embodiments can be conveniently implemented using one or more general purpose processors, microprocessors, digital signal processors, micro-controllers, and the like, programmed according to the teachings of the example embodiments, as will be appreciated by those skilled in the computer and/or software art(s). Appropriate software can be readily prepared by programmers of ordinary skill based on the teachings of the example embodiments, as will be appreciated by those skilled in the software art. In addition, the example embodiments can be implemented by the preparation of application-specific integrated circuits or by interconnecting an appropriate network of conventional component circuits, as will be appreciated by those skilled in the electrical art(s). Thus, the examples are not limited to any specific combination of hardware and/or software. Stored on any one or on a combination of computer readable media, the examples can include software for controlling the components of the example embodiments, for driving the components of the example embodiments, for enabling the components of the example embodiments to interact with a human user, and the like. Such computer readable media further can include a computer program for performing all or a portion (if processing is distributed) of the processing performed in implementing the example embodiments. Computer code devices of the examples may include any suitable interpretable or executable code mechanism, including but not limited to scripts, interpretable programs, dynamic link libraries (DLLs), Java classes and applets, complete executable programs, and the like. In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, non-volatile media, volatile media, transmission media, and the like.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the claims.

## Claims

1. A safety circuit board (100) for controlling an electromechanical brake and motor controller (104) of a passenger transport installation, the safety circuit board (100) comprising:
at least one processing unit (102A, 102B);
a main safety output (108A) with an associated relay connected to the at least one processing unit (102A, 102B) and providing a connection to the electromechanical brake and motor controller (104); and
a secondary safety output (108B) with an associated relay connected to the at least one processing unit (102A, 102B) and providing a connection to the electromechanical brake and motor controller (104);
wherein the main safety output (108A) and the secondary safety output (108B) are configured in parallel enabling control of the electromechanical brake and motor controller (104) with the at least one processing unit (102A, 102B) using either of the safety outputs (108A, 108B),
**characterised in that**
the at least one processing unit (102A, 102B) is configured to:
switch from one of the main safety output (108A) and the secondary safety output (108B) to the other one of the main safety output (108A) and the secondary safety output (108B);
disable an immediate new switching between the safety outputs;
test the relay associated with the safety output from which the switching process was originated; and
allow a subsequent switching after a successful relay test, and disable a subsequent switching when detecting a failure with the relay test.

2. The safety circuit board (100) of claim 1, wherein the at least one processing unit (102A, 102B) is configured to:
alternate between the main safety output (108A) and the secondary safety output (108B) when controlling the electromechanical brake and motor controller (104).

3. The safety circuit board (100) of claim 2, wherein the at least one processing unit (102A, 102B) is configured to:
switch periodically between the main safety output (108A) and the secondary safety output (108B) when controlling the electromechanical brake and motor controller (104).

4. The safety circuit board (100) of claim 2 or 3, wherein the at least one processing unit (102A, 102B) is configured to:
detect that a switch between the main safety output (108A) and the secondary safety output (108B) fails; and
limit the maximum usage time of the currently used safety output.

5. The safety circuit board (100) of claim 4, wherein the at least one processing unit (102A, 102B) is configured to issue a request to stop the passenger transport installation in response to exceeding the maximum usage time.

6. The safety circuit board (100) of any of claims 1 - 5, wherein the passenger transport installation comprises an elevator.

7. The safety circuit board (100) of any of claims 1 - 5, wherein the passenger transport installation comprises an escalator.

8. A passenger transport system comprising:
an electromechanical brake and motor controller (104) of a passenger transport installation; and
a safety circuit board (100) according to any of claims 1 - 7.

## Patentansprüche

1. Sicherheitsplatine (100) zum Steuern einer elektromechanischen Brems- und Motorsteuerung (104) einer Personenbeförderungsanlage, wobei die Sicherheitsplatine (100) aufweist:
mindestens eine Verarbeitungseinheit (102A, 102B);
einen Hauptsicherheitsausgang (108A) mit einem assoziierten Relais, das mit der mindestens einen Verarbeitungseinheit (102A, 102B) verbunden ist und eine Verbindung zu der elektromechanischen Brems- und Motorsteuerung (104) herstellt; und
einen sekundären Sicherheitsausgang (108B) mit einem zugehörigen Relais, das mit der mindestens einen Verarbeitungseinheit (102A, 102B) verbunden ist und eine Verbindung zu der elektromechanischen Brems- und Motorsteuerung (104) herstellt;
wobei der Hauptsicherheitsausgang (108A) und der Sekundärsicherheitsausgang (108B) parallel konfiguriert sind, wodurch die Steuerung der elektromechanischen Brems- und Motorsteuerung (104) mit der mindestens einen Verarbeitungseinheit (102A, 102B) unter Verwendung eines der Sicherheitsausgänge (108A, 108B) ermöglicht,
**dadurch gekennzeichnet, dass**
die mindestens eine Verarbeitungseinheit (102A, 102B) eingerichtet ist, um:
von einem von dem Hauptsicherheitsausgang (108A) und dem sekundären Sicherheitsausgang (108B) auf den anderen des Hauptsicherheitsausgangs (108A) und des sekundären Sicherheitsausgangs (108B) umzuschalten;
ein sofortiges erneutes Umschalten zwischen den Sicherheitsausgängen zu sperren;
das mit dem Sicherheitsausgang assoziierte Relais, von dem der Schaltvorgang ausgegangen ist, zu testen; und
nach einem erfolgreichen Relaistest ein anschließendes Schalten zuzulassen und ein anschließendes Schalten zu sperren, wenn bei dem Relaistest ein Fehler festgestellt wird.

2. Sicherheitsplatine (100) nach Anspruch 1, wobei die mindestens eine Verarbeitungseinheit (102A, 102B) eingerichtet ist, um:
beim Steuern der elektromechanischen Brems- und Motorsteuerung (104) zwischen dem Hauptsicherheitsausgang (108A) und dem sekundären Sicherheitsausgang (108B) zu wechseln.

3. Sicherheitsplatine (100) nach Anspruch 2, wobei die mindestens eine Verarbeitungseinheit (102A, 102B) eingerichtet ist, um:
beim Steuern der elektromechanischen Bremse und der Motorsteuerung (104) periodisch zwischen dem Hauptsicherheitsausgang (108A) und dem sekundären Sicherheitsausgang (108B) umzuschalten.

4. Sicherheitsplatine (100) nach Anspruch 2 oder 3, wobei die mindestens eine Verarbeitungseinheit (102A, 102B) eingerichtet ist, um:
zu erkennen, dass ein Schalter zwischen dem Hauptsicherheitsausgang (108A) und dem sekundären Sicherheitsausgang (108B) ausfällt; und
die maximale Nutzungszeit des aktuell verwendeten Sicherheitsausgangs zu begrenzen.

5. Sicherheitsplatine (100) nach Anspruch 4, wobei die mindestens eine Verarbeitungseinheit (102A, 102B) eingerichtet ist, als Reaktion auf das Überschreiten der maximalen Nutzungszeit eine Aufforderung zum Anhalten der Personenbeförderungsanlage auszugeben.

6. Sicherheitsplatine (100) nach einem der Ansprüche 1-5, wobei die Personenbeförderungsanlage einen Aufzug aufweist.

7. Sicherheitsplatine (100) nach einem der Ansprüche 1-5, wobei die Personenbeförderungsanlage eine Rolltreppe aufweist.

8. Personenbeförderungssystem, aufweisend:
eine elektromechanische Brems- und Motorsteuerung (104) einer Personenbeförderungsanlage; und
eine Sicherheitsplatine (100) nach einem der Ansprüche 1 bis 7.

## Revendications

1. Carte de circuit de sécurité (100) pour commander un contrôleur électromécanique de frein et de moteur (104) d'une installation de transport de passagers, la carte de circuit de sécurité (100) comprenant :
au moins une unité de traitement (102A, 102B) ;
une sortie de sécurité principale (108A) avec un relais associé connecté à l'au moins une unité de traitement (102A, 102B) et assurant une connexion au contrôleur électromécanique de frein et de moteur (104) ; et
une sortie de sécurité secondaire (108B ) avec un relais associé connecté à l'au moins une unité de traitement (102A, 102B) et assurant une connexion au contrôleur électromécanique de frein et de moteur (104) ;
dans laquelle la sortie de sécurité principale (108A) et la sortie de sécurité secondaire (108B) sont configurées en parallèle permettant de commander le contrôleur électromécanique de frein et de moteur (104) avec l'au moins une unité de traitement (102A, 102B) en utilisant l'une des sorties de sécurité (108A, 108B),
**caractérisée en ce que** l'au moins une unité de traitement (102A, 102B) est configurée pour :
commuter de l'une de la sortie de sécurité principale (108A) et de la sortie de sécurité secondaire (108B) à l'autre de la sortie de sécurité principale (108A) et de la sortie de sécurité secondaire (108B) ;
désactiver une nouvelle commutation immédiate entre les sorties de sécurité ;
tester le relais associé à la sortie de sécurité à partir de laquelle le processus de commutation a été initié ; et
permettre une commutation ultérieure après un test de relais réussi, et désactiver une commutation ultérieure en cas de détection d'une défaillance lors du test de relais.

2. Carte de circuit de sécurité (100) de la revendication 1, dans laquelle l'au moins une unité de traitement (102A, 102B) est configurée pour :
alterner entre la sortie de sécurité principale (108A) et la sortie de sécurité secondaire (108B) lors de la commande du contrôleur électromécanique de frein et de moteur (104).

3. Carte de circuit de sécurité (100) de la revendication 2, dans laquelle l'au moins une unité de traitement (102A, 102B) est configurée pour :
commuter périodiquement entre la sortie de sécurité principale (108A) et la sortie de sécurité secondaire (108B) lors de la commande du contrôleur électromécanique de frein et de moteur (104).

4. Carte de circuit de sécurité (100) de la revendication 2 ou 3, dans laquelle l'au moins une unité de traitement (102A, 102B) est configurée pour :
détecter qu'un commutateur entre la sortie de sécurité principale (108A) et la sortie de sécurité secondaire (108B) tombe en panne ; et
limiter la durée d'utilisation maximale de la sortie de sécurité actuellement utilisée.

5. Carte de circuit de sécurité (100) de la revendication 4, dans laquelle l'au moins une unité de traitement (102A, 102B) est configurée pour émettre une demande d'arrêt de l'installation de transport de passagers en réponse au dépassement de la durée d'utilisation maximale.

6. Carte de circuit de sécurité (100) de l'une des revendications 1 à 5, dans laquelle l'installation de transport de passagers comprend un ascenseur.

7. Carte de circuit de sécurité (100) de l'une des revendications 1 à 5, dans laquelle l'installation de transport de passagers comprend un escalier mécanique.

8. Système de transport de passagers, comprenant :
un contrôleur électromécanique de frein et de moteur (104) d'une installation de transport de passagers ; et
une carte de circuit de sécurité (100) selon l'une des revendications 1 à 7.
